# EUROPÄISCHE PATENTSCHRIFT

(11) **EP 1 065 085 B1**
(45) Veröffentlichungstag und Bekanntmachung des Hinweises auf die Patenterteilung: **08.01.2003**
(21) Anmeldenummer: 00112853.7
(22) Anmeldetag: 17.06.2000
(51) Int. Cl.: B60J 7/14

(54) **Hardtop-Fahrzeugdach**
Vehicle provided with an hard top
Vehicule équipé avec un toit rigide

(30) Priorität: 02.07.1999 DE 19930616
(43) Veröffentlichungstag der Anmeldung: 03.01.2001
(73) Patentinhaber: CTS Fahrzeug-Dachsysteme GmbH, 21079 Hamburg (DE); ADAM OPEL AG, 65423 Rüsselsheim (DE)
(72) Erfinder: Halbweiss, Thomas, 71672 Marbach (DE); Klein, Berthold, 71227 Rutesheim (DE); Wojciech, Wezyk, 71065 Sindelfingen (DE); Treser, Walter, 65189 Wiesbaden (DE); Metzger, Oliver, 65468 Trebur (DE); Leopold, Frank, 65232 Taunusstein (DE)
(74) Vertreter: Müller, Gottfried

(56) Entgegenhaltungen:
- EP-A- 0 275 184
- DE-A- 3 733 892
- US-A- 5 785 375

## Beschreibung

Die Erfindung bezieht sich auf ein Hardtop-Fahrzeugdach nach dem Oberbegriff des Anspruches 1.

Aus der Druckschrift DE 197 06 397 C1 ist ein Hardtop für ein Cabriolet bekannt, das ein oberes Vorderdachteil und ein hinteres Heckdachteil aufweist, welche beide zwischen einer Schließstellung und einer den Fahrzeuginnenraum nach oben öffnenden Ablagestellung verstellbar sind. Die Überführung von Schließ- in Ablagestellung bzw. umgekehrt erfolgt mit Hilfe einer Verstellkinematik, die ein die Dachteile beaufschlagendes Faltgestänge sowie eine fahrzeugseitige Führungsstange aufweist, auf der ein Führungselement des Faltgestänges zur Überführung der Dachteile in Schließ- bzw. in Ablagestellung gleitend gelagert ist.

Die lineare, translatorische Bewegung des Führungselementes auf der Gleitstange wird über das Faltgestänge in eine Rotationsbewegung der Dachteile umgesetzt, wodurch die Dachteile in Ablagestellung eine zusammengeklappte Position einnehmen. Der während der Stellbewegung benötigte Bewegungsraum des Fahrzeugdaches wird hierbei maßgeblich durch die Lage der Gleitschiene in der Fahrzeugkarosserie sowie die Rotationsbewegung der Dachteile bestimmt. Es ist zu beachten, daß der erforderliche Bewegungsraum für das Fahrzeugdach den Fahrzeuginnenraum nicht beeinträchtigen darf sowie um fahrzeugfeste Bauteile und Baugruppen wie z. B. Kopfstützen herumgeführt werden muß, was eine näherungsweise kreisförmige Bewegungskurve erfordert. Andererseits soll aus konstruktiven Gründen und aus Platzgründen der Bewegungsraum bzw. die Bewegungskurve des Fahrzeugdaches so klein wie möglich gehalten werden.

Ein weiteres versenkbares Fahrzeugdach, das aus insgesamt drei starren Dachteilen besteht, ist aus der Druckschrift DE 196 42 154 A1 bekannt. Die drei Dachteile sind kinematisch aneinander gekoppelt, wobei das hintere und das mittlere Dachteil in Ablagestellung gleichsinnig abgelegt sind, das vordere Dachteil dagegen in gegensinniger Richtung zusammengeklappt wird. Das mittlere Dachteil ist über einen Mehrgelenk-Mechanismus mit dem hinteren Dachteil gekoppelt und kann aus einer gemeinsamen Dachebene, in der die Dachteile sich in Schließstellung befinden, durch Betätigung des Gelenkmechanismus parallel zum hinteren Dachteil versetzt werden. Bei der Überführung von Schließ- in Ablagestellung wird bei Betätigung des Gelenkmechanismus das mittlere Dachteil in einer Kreisbahn in die Ablageposition verschwenkt, in der das mittlere Dachteil etwa parallel zum hinteren Dachteil abgelegt ist. Um die Verschwenkbewegung des mittleren Dachteils in bezug auf das hintere Dachteil umsetzen zu können, ist einen verhältnismäßig großer Bewegungsraum erforderlich.

Der Erfindung liegt das Problem zugrunde, ein versenkbares Hardtop-Fahrzeugdach zu schaffen, das ein Minimum an Ablageraum benötigt und auf einer variabel gestaltbaren Bewegungsbahn zwischen Schließ- und Ablagestellung verstellt werden kann.

Dieses Problem wird erfindungsgemäß mit den Merkmalen des Anspruches 1 gelöst. Weitere zweckmäßige Ausführungsformen sind den Unteransprüchen zu entnehmen.

Gemäß der Neuerung ist zusätzlich zur fahrzeugfesten ersten Führungskulisse eine zweite Führungskulisse vorgesehen, die jedoch um eine fahrzeugfeste Drehachse schwenkbar ist. Eines der Dachteile - üblicherweise das hintere Dachteil - ist nun sowohl in der ersten als auch in der zweiten Führungskulisse gleitend geführt, wodurch der Vorteil erzielt wird, daß in Abhängigkeit der Form der Führungskulissen sowie der momentanen Relativposition der Führungskulissen zueinander ein hoher Grad an Beweglichkeit des Dachteiles realisiert werden kann, was zur Folge hat, daß auch die Bewegungsbahn des Fahrzeugdaches sehr flexibel an die konstruktiven Gegebenheiten angepaßt werden kann. Zusätzlich zur größeren Flexibilität bei der Überführung zwischen Schließ- in Ablagestellung wird der Vorteil erzielt, daß die Position des Ablageraums für das Fahrzeugdach flexibel bestimmt werden kann, wodurch eine Optimierung des zur Verfügung stehenden Kofferraums und auch des Fahrzeuginnenraumes möglich ist.

Die Kombination von zwei Führungskulissen ermöglicht die Ausführung einer rotatorischen Schwenkbewegung und einer translatorischen Schiebebewegung, wobei beide Bewegungsarten sowohl gleichzeitig als auch aufeinanderfolgend ausgeführt werden können. Einer Rotationsbewegung kann je nach Form der Führungskulissen eine frei wählbare Translationsbewegung überlagert werden.

In einer zweckmäßigen Ausführung sind die beiden Führungskulissen winklig zueinander angeordnet, wodurch in jeder Position des Fahrzeugdaches zwischen Schließ- und Ablagestellung eine Abstützung des Daches erreicht wird, so daß ein durch die Gewichtskraft verursachtes, unkontrolliertes Entlanggleiten in eine Endposition mit entsprechend hohen Anschlagkräften vermieden wird, zumindest aber so weit reduziert werden kann, daß lediglich geringe Halte- bzw. Führungskräfte für die Überführungsbewegung erforderlich sind.

In bevorzugter Ausführung weist die fahrzeugfeste erste Führungskulisse einen teilkreisförmigen Abschnitt auf, an den sich zweckmäßig ein geradliniger Abschnitt anschließt, wobei der teilkreisförmige Abschnitt vorteilhaft einer ersten Schwenkbewegung zum Öffnen des Fahrzeugdaches und der geradlinige Abschnitt der sich daran anschließenden Überführung des Fahrzeugdaches in den Ablageraum zugeordnet ist. Die Relativposition der zweiten, schwenkbaren Führungskulisse schließt in jeder möglichen Winkelposition der zweiten Führungskulisse mit der ersten, fahrzeugfesten Führungskulisse einen Winkel ein, wobei bevorzugt die fahrzeugfeste Schwenkachse der schwenkbaren zweiten Führungskulisse mit dem Mittelpunkt des teilkreisförmigen Abschnittes der fahrzeugfesten ersten Kulisse zusammenfällt. Dadurch wird erreicht, daß das Führungselement des Dachteils, das in beiden Führungskulissen gleitend geführt ist, zumindest im Bereich des teilkreisförmigen Abschnittes eine ausschließliche Schwenkbewegung ohne translatorische Komponente durchführt. Dementsprechend führt auch das mit dem Führungselement verbundene Dachteil eine ausschließliche Rotationsbewegung in diesem Abschnitt durch, wobei die Rotationsachse des Dachteils mit der Drehachse der schwenkbaren zweiten Führungskulisse zusammenfällt.

In dem sich anschließenden geradlinigen Abschnitt der ersten Führungskulisse wird hauptsächlich eine translatorische Bewegung des Führungselementes und des zugehörigen Dachteiles durchgeführt, der jedoch zweckmäßig eine rotatorische Komponente überlagert ist. Die translatorische Komponente der Bewegung dient insbesondere der Überführung des Daches in den Ablageraum.

Über die Form insbesondere der fahrzeugfesten ersten Führungskulisse kann praktische jede beliebige Bewegung des Fahrzeugdaches realisiert werden. Die winklige Anordnung der zweiten Führungskulisse zur ersten Führungskulisse gewährleistet eine Überführung mit geringen Stelikräften.

Zwischen dem vorderen und dem hinteren Dachteil ist vorteilhaft eine Gelenkverbindung vorgesehen, über die eine Relativbewegung des vorderen Dachteils in Bezug auf das hintere Dachteil durchführbar ist, um in Ablagestellung eine eng zusammengelegte Position zu erreichen. Die Gelenkverbindung ist bevorzugt als Viergelenk-Kinematik ausgebildet und ermöglicht es, das vordere Dachteil in eine dem hinteren Dachteil unmittelbar vorgelagerte, etwa parallele Position zu überführen, in der beide Dachteile gleichsinnig abgelegt sind, so daß beide Dachteile mit ihrer konvexen Wölbung in platzsparender Weise aneinander liegen und ein Minimum an Ablageraum benötigen. Damit ist eine Ablage hinter den Sitzen und vor der Hinterachse ohne Beeinträchtigung des dahinter liegenden Kofferraumes möglich.

Die Gelenkverbindung ist bevorzugt gleitend auf einer Gleitschiene geführt, welche mit dem hinteren Dachteil verbunden ist und insbesondere etwa parallel zur Dachebene des hinteren Dachteils verläuft. Die Gleitschiene ermöglicht eine üblicherweise translatorische Relativbewegung des vorderen Dachteils zum hinteren Dachteil, welche mit der über den Viergelenk-Mechanismus erzeugten Schwenkbewegung kombiniert werden kann, indem zunächst das vordere Dachteil aus der gemeinsamen Dachebene mit dem hinteren Dachteil mit Hilfe des Viergelenk-Mechanismus parallel versetzt wird und anschließend das vordere Dachteil entlang der Gleitschiene parallel zum hinteren Dachteil verschoben wird. Vorteilhaft werden die Gelenkverbindung und die Verschiebung auf der Gleitschiene von unterschiedlichen Antrieben ausgeführt, die sich insbesondere von dem für die Bewegung des hinteren Dachteils in den Führungskulissen benötigten Antrieb unterscheiden.

Die Erfindung wird an Hand von Ausführungsbeispielen, die in der Zeichnung dargestellt sind, nachfolgend eingehender beschrieben. Es zeigen:
- Fig. 1 bis Fig. 5: mehrere Seitenansichten auf ein Hardtop-Fahrzeugdach mit zwei starren Dachteilen, dargestellt in verschiedenen aufeinanderfolgenden Phasen zwischen Schließstelluhg und Ablagestellung,
- Fig. 6 bis Fig. 8: eine Ausschnittvergrößerung der Verstelleinrichtung zwischen Karosserie und hinterem Dachteil, dargestellt in drei Phasen zwischen Schließstellung und Ablagestellung,
- Fig. 9: eine perspektivische Darstellung des Fahrzeugdaches in Schließstellung,
- Fig. 10: eine vergrößerte Ansicht der Verstelleinrichtung zwischen vorderem und hinterem Dachteil.

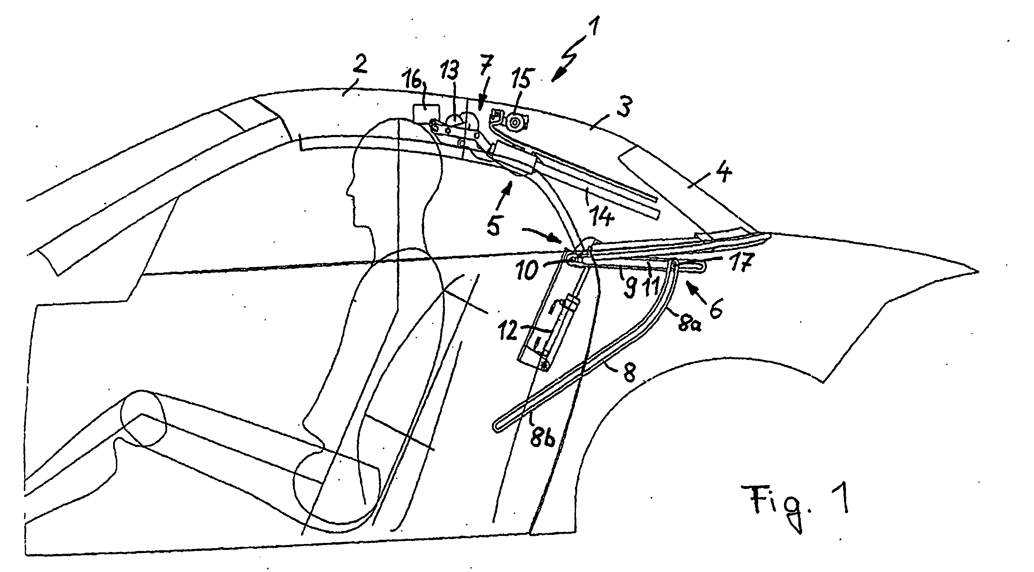

Bei den in den Fig. 1 bis 10 dargestellten Ausführungsbeispielen sind gleiche Bauteile mit gleichen Bezugszeichen versehen.

Das in Fig. 1 in Schließstellung dargestellte Hardtop-Fahrzeugdach 1 besteht aus einem der Fahrzeugvorderseite zugewandten vorderen Dachteil 2 und einem der Fahrzeugrückseite benachbarten hinteren Dachteil 3, in das eine Heckscheibe 4 integriert ist, sowie aus einer Verstellkinematik 5, die diverse Hebel, Lenker und Aktuatoren umfaßt, um das Fahrzeugdach 1 zwischen Schließstellung und Ablagestellung verstellen zu können. Die Verstellkinematik 5 besteht aus einer ersten Verstelleinrichtung 6, über die das hintere Dachteil 3 beaufschlagbar ist, sowie einer zweiten Verstelleinrichtung 7, über die die Relativbewegung des vorderen Dachteils 2 in Bezug zum hinteren Dachteil 3 durchgeführt wird. Die erste Verstelleinrichtung 6 für die Bewegung des hinteren Dachteiles 3 umfaßt eine erste Führungskulisse 8, die fahrzeugfest mit der Karosserie des Fahrzeuges verbunden ist, eine zweite Führungskulisse 9, die um eine fahrzeugfeste Drehachse 10 verschwenkbar gehalten ist, ein mit dem hinteren Dachteil 3 fest verbundenes Führungselement 11, das sowohl in der ersten als auch in der zweiten Führungskulisse 8 bzw. 9 geführt ist, sowie ein Stellglied 12, über das die Winkelposition der schwenkbaren zweiten Führungskulisse 9 einstellbar ist.

Die zweite Verstelleinrichtung 7, die der Verstellung des vorderen Dachteiles 2 relativ zum hinteren Dachteil 3 zugeordnet ist, umfaßt eine Gelenkverbindung 13, welche insbesondere als Vier-Gelenk-Kinematik ausgebildet ist, eine mit dem hinteren Dachteil 3 verbundene Gleitschiene 14, auf der die Gelenkverbindung 13 verschiebbar gehalten ist, sowie Stellglieder 15 und 16 zum Antrieb der Gelenkverbindung 13 bzw. für die Umsetzung der Verschiebung der Gelenkverbindung 13 auf der Gleitschiene 14.

Die erste Führungskulisse 8 der Verstelleinrichtung 6 weist einen teilkreisförmig gebogenen Abschnitt 8a sowie einen sich daran anschließenden geradlinig verlaufenden Abschnitt 8b auf. Die erste Führungskulisse 8 ist ebenso wie die zweite Führungskulisse 9 als Langloch-Kulisse ausgebildet, die aus zwei parallel geführten Stäben besteht, zwischen denen eine Führungsnut verläuft, in der ein Vorsprung, ein Zapfen o.ä. des Führungselementes 11, das fester Bestandteil des hinteren Dachteiles 3 ist, geführt ist. Die zweite, schwenkbar um die Drehachse 10 gelagerte Führungskulisse 9 ist geradlinig ausgebildet.

Anstelle von Führungskulissen können auch Führungsschienen verwendet werden, auf denen eine Führungsmanschette, welche Teil des hinteren Dachteiles ist, verstellbar geführt ist.

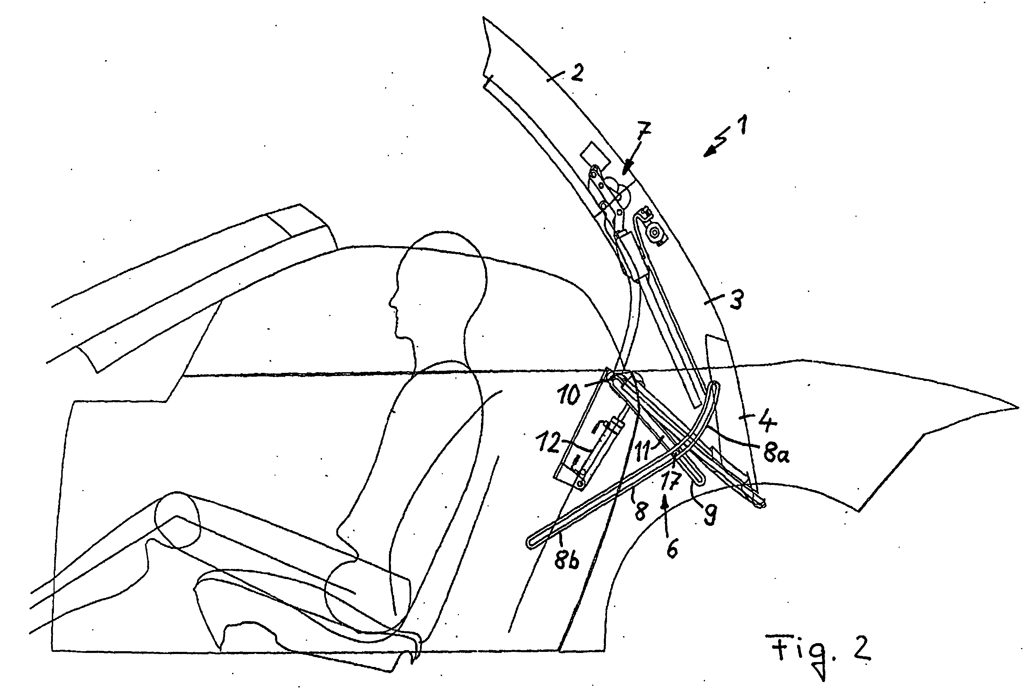

In Fig. 2 ist das Fahrzeugdach 1 in teilweise geöffneter Position dargestellt, wobei lediglich eine Verschwenkung des hinteren Dachteiles 3 stattgefunden hat, die Relativposition zwischen vorderem und hinterem Dachteil 2 bzw. 3 sich dagegen nicht verändert hat, so daß das vordere Dachteil 2 und das hintere Dachteil 3 noch in einer gemeinsamen Dachebene liegen. Das hintere Dachteil 3 wird durch Betätigen des Stellglieds 12 verschwenkt, welches an der zweiten, schwenkbar um die Drehachse 10 gelagerten Führungskulisse 9 angreift, in der das Führungselement 11 verschiebbar gelagert ist. Bei der Überführung aus der in Fig. 1 gezeigten Schließstellung in die in Fig. 2 dargestellt Zwischenstellung findet ausschließlich eine Rotationsbewegung des hinteren Dachteiles 3 statt, bei der auch das Führungselement 11 des hinteren Dachteils 3 eine ausschließliche Rotationsbewegung um die Drehachse 10 durchführt. Bei dieser Bewegung wird ein Zapfen 17 des Führungselements 11 in dem teilkreisförmigen Abschnitt 8a der ersten Führungskulisse 8 geführt.

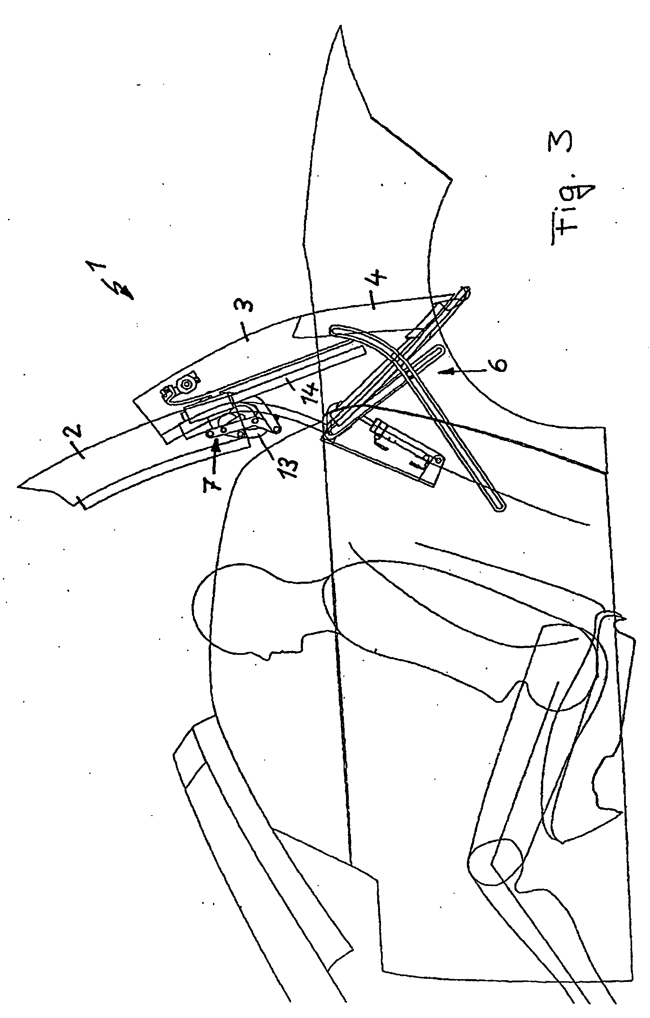

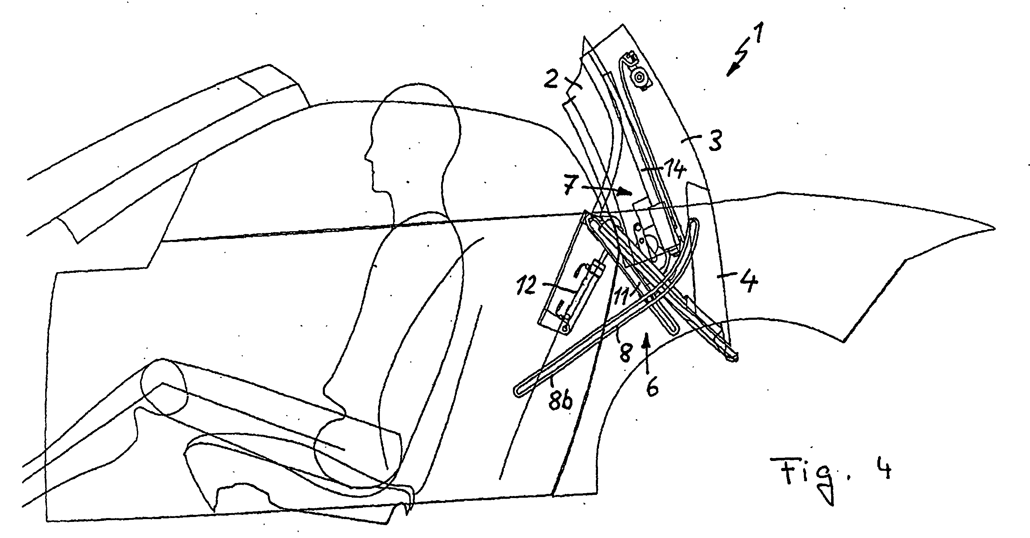

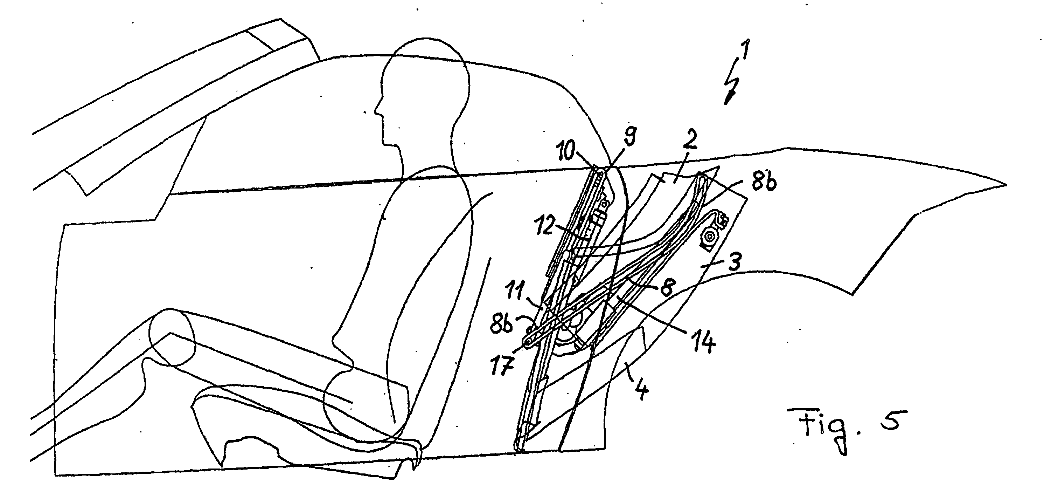

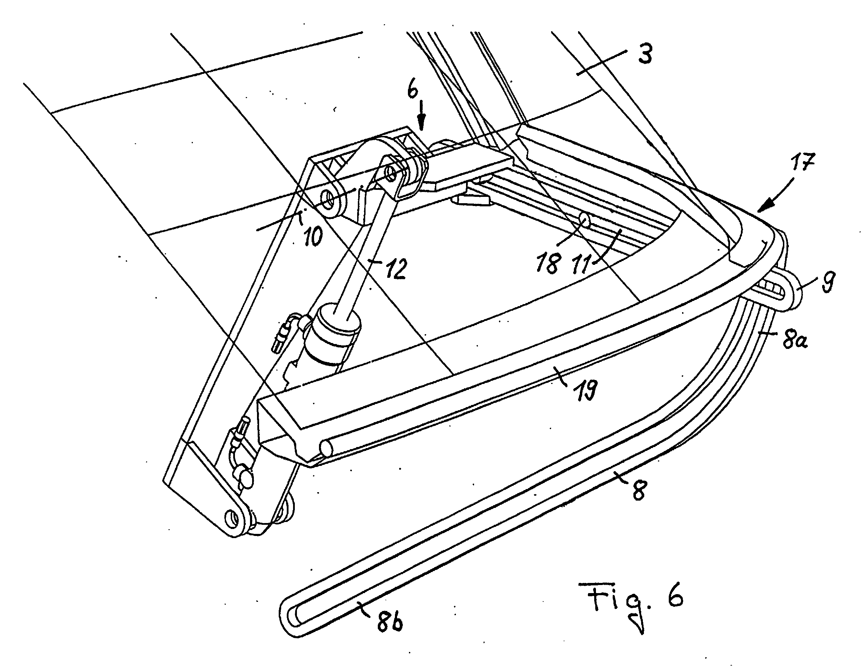

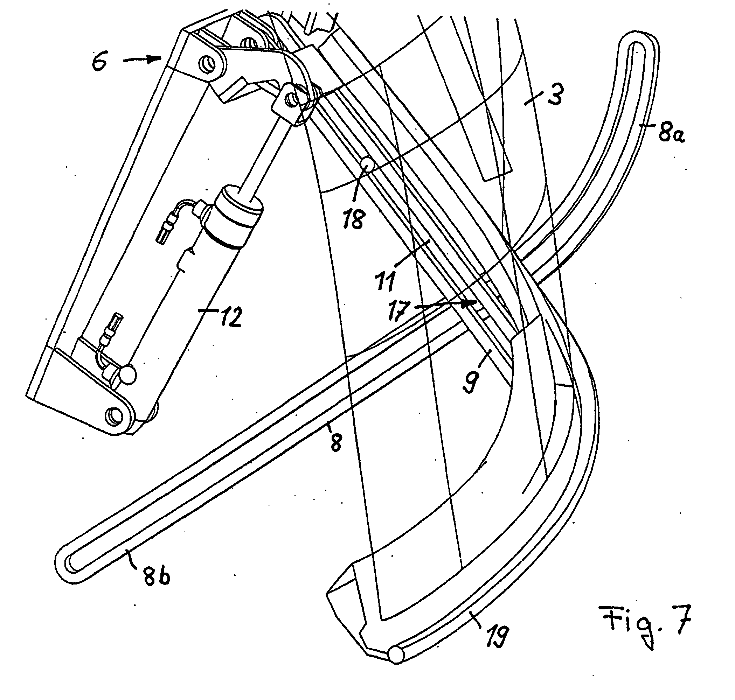

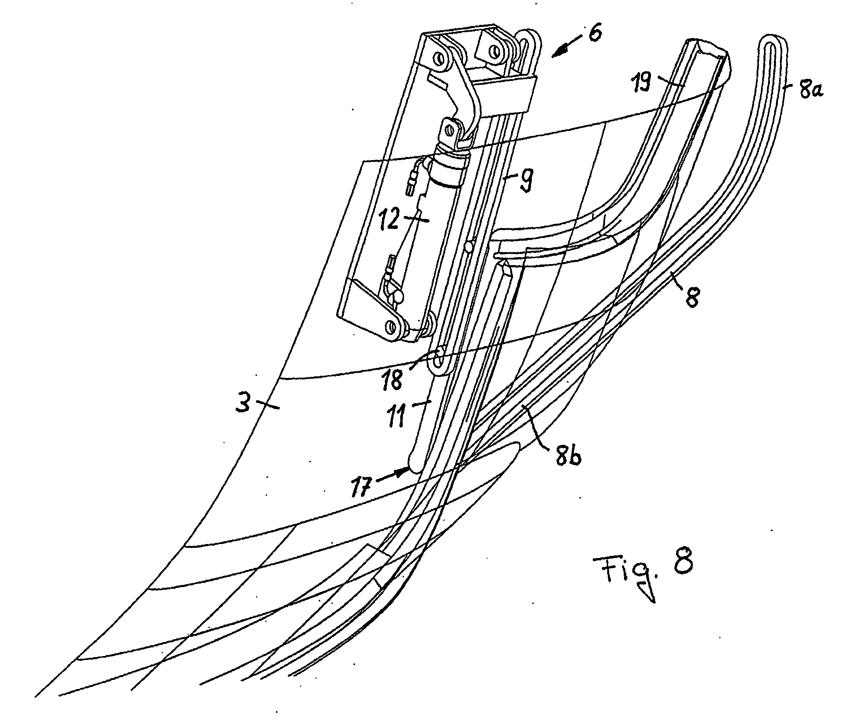

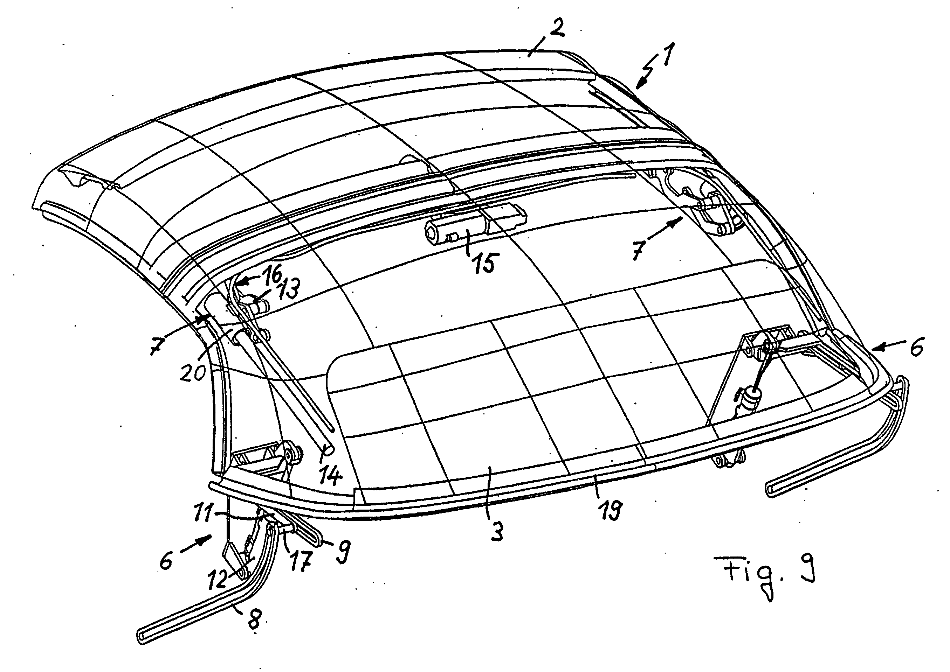

In Fig. 3 ist das Fahrzeugdach 1 in einer auf die in Fig. 2 dargestellte Zwischenposition nachfolgenden Position dargestellt. Im Anschluß an die erste Öffnungsbewegung, welche als reine Schwenkbewegung ausgeführt wird und die in Fig. 2 dargestellt ist, erfolgt in Fig. 3 eine Ausstellbewegung des vorderen Dachteiles 2 in Bezug zum hinteren Dachteil 3 durch Betätigen der Verstelleinrichtung 7. Während dieser Ausstellbewegung sowie der folgenden translatorischen Verstellbewegung, die in Fig. 4 dargestellt ist, wird die Position des hinteren Dachteiles 3 relativ zur Fahrzeugkarosserie beibehalten.

Gemäß Fig. 3 wird zunächst die Gelenkverbindung 13 der Verstelleinrichtung 7 betätigt, wodurch das vordere Dachteil 2 aus seiner ursprünglichen Position parallel in Richtung Fahrzeuginnenraum verschoben wird und gleichzeitig geringfügig in eine teilweise überlappende Stellung mit dem hinteren Dachteil 3 verbracht wird.

Bei der Verstellbewegung von der in Fig. 3 gezeigten Position zu der in Fig. 4 gezeigten Position wird das vordere Dachteil 2 entlang der Gleitschiene 14 translatorisch so weit verschoben, bis das vordere Dachteil 2 vom hinteren Dachteil 3 überdeckt ist. Die Gleitschiene 14 liegt im wesentlichen parallel zur Dachebene des hinteren Dachteiles 3. Während der Verschiebebewegung entlang der Gleitschiene 14 wird die Position des hinteren Dachteiles 3 in bezug auf die Karosserie unverändert beibehalten.

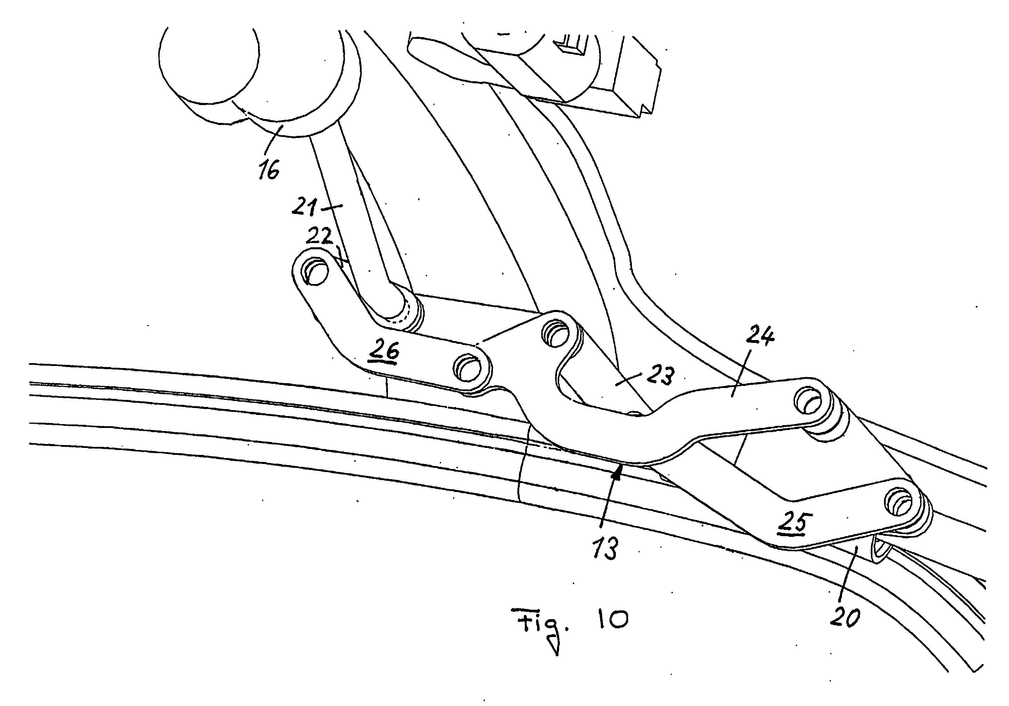

In Fig. 5 ist das Hardtop-Fahrzeugdach 1 in Ablageposition dargestellt, in der das vordere Dachteil 2, das hintere Dachteil 3 sowie die gesamte Verstellkinematik in einem Ablageraum verstaut sind, der zwischen dem Fahrzeuginnenraum und dem Kofferraum des Fahrzeuges liegt. Bei der Überführung aus der in Fig. 4 dargestellten Zwischenstellung in die Ablagestellung gemäß Fig. 5 wird die Verstelleinrichtung 6 betätigt, mittels der das hintere Dachteil 3 verstellt werden kann. Während dieser Verstellbewegung wird die Relativposition zwischen vorderem und hinterem Dachteil 2 bzw. 3 unverändert beibehalten.

Während der letzten Phase zur Überführung in Ablagestellung gleitet das Führungselement 11 mit seinem Zapfen 17 im geradlinigen Abschnitt 8b der ersten, fahrzeugfesten Führungskulisse 8 bis zum endseitigen Anschlag entlang. Zugleich wird die gegenüberliegende Stirnseite des Führungselementes 11 in der zweiten Führungskulisse 9 verschoben, die durch Beaufschlagung mit dem Stellglied 12 um die Drehachse 10 weiter verschwenkt wird. Die gleichzeitige Verschiebung des Führungselementes 11 in beiden Führungskulissen 8 und 9 unter Berücksichtigung der Schwenkbewegung der zweiten Führungskulisse 9 führt zu einer kombinierten translatorischen und rotatorischen Ablagebewegung des hinteren Dachteiles 3 sowie des in dieser Phase fest mit dem hinteren Dachteil 3 verbundenen Dachteiles 2.

Der Ablauf der Bewegungen zwischen dem hinteren Dachteil 3 und der Fahrzeugkarosserie sowie zwischen vorderem und hinterem Dachteil 2, 3 wird durch einen koordinierten Antrieb über die Stellglieder 12, 15 und 16 aufeinander abgestimmt.

Die Fig. 6, 7 und 8 zeigen eine vergrößerte Darstellung der Verstelleinrichtung 6, über die das hintere Dachteil 3 gegenüber der Fahrzeugkarosserie verschwenkt und verschoben werden kann. In Fig. 6 ist das hintere Dachteil 3 in Schließstellung dargestellt, in der der Stellzylinder der Stellglieds 12 voll ausgefahren ist und die um die Drehachse 10 schwenkbare zweite Führungskulisse 9 eine näherungsweise horizontale Lage einnimmt. Das Führungselement 11, das fest mit dem hinteren Dachteil 3 verbunden ist, ist mit einem ersten, von einem Querbügel 19 des hinteres Dachteiles 3 verdeckten Zapfen 17 in der fahrzeugfesten Führungskulisse 8 geführt und mit einem zweiten Zapfen 18 in der schwenkbaren Führungskulisse 9 geführt. Der erste Zapfen 17 des Führungselementes 11 befindet sich in einer Anschlagstellung im Bereich der Stirnseite des gebogenen Abschnittes 8a der Führungskulisse 8, der zweite Zapfen 18 liegt etwa in der Mitte der zweiten Führungskulisse 9. Der geradlinige Abschnitt 8b der fahrzeugfesten Führungskulisse 8 weist nach schräg unten in Richtung des Fahrzeuginnenraumes, der teilkreisförmige Abschnitt 8a ist entsprechend nach oben gerichtet.

Die Zwischenstellung gemäß Fig. 7 entspricht der Darstellung nach Fig. 2, in welcher die schwenkbare Führungskulisse 9 über das Stellglied 12 so weit nach unten verschwenkt worden ist, daß das Fahrzeugdach 3 in eine den Fahrzeuginnenraum öffnende Position überführt wird. In dieser Stellung hat der Zapfen 17 des Führungselementes 11 des hinteren Dachteiles 3 den teilkreisförmigen Abschnitt 8a der fahrzeugfesten Führungskulisse 8 vollständig durchlaufen.

Fig. 8 zeigt das Fahrzeugdach in Ablagestellung, in der das hintere Dachteil 3 in den Ablageraum hinter dem Fahrgastinnenraum versenkt ist. In Ablagestellung ist der Stellzylinder des Stellgliedes 12 vollständig eingefahren, die schwenkbare Führungskulisse 9 weist etwa vertikal nach unten. Das Führungselement 11 ist in der schwenkbaren Führungskulisse 9 so weit verschoben worden, daß der in der Führungskulisse 9 geführte Zapfen 18 des Führungselementes 11 sich in dem Bereich des stirnseitigen Anschlages der Führungskulisse 9 befindet. Zugleich ist der gegenüberliegende Zapfen 17 des Führungselementes 11 entlang des geradlinigen Abschnitts 8b der fahrzeugfesten Führungskulisse 8 geschoben worden und befindet sich nun im Bereich des stirnseitigen Anschlages des geradlinigen Abschnittes 8b. Das hintere Dachteil 3 liegt steil nach unten gerichtet im Ablageraum.

Der perspektivischen Gesamtdarstellung nach Fig. 9 ist zu entnehmen, daß das Fahrzeugdach 1 mit Ausnahme des Stellglieds 15, das für die Verschiebung des vorderen Dachteiles 2 auf der Gleitschiene 14 verantwortlich ist und das nur einmal vorhanden ist, die gesamte Anordnung spiegelsymetrisch ausgebildet ist. Im Bereich beider Dachseiten ist jeweils eine Verstelleinrichtung 6 für die Überführung des hinteren Dachteiles 3 in den Ablageraum sowie eine Verstelleinrichtung 7 für die Relativbewegung des vorderen Dachteiles 2 in Bezug zum hinteren Dachteil 3 vorgesehen. Der Verstelleinrichtung 7 ist eine Gleithülse 20 zugeordnet, die gleitend auf der Gleitschiene 14 gehalten ist. Die Gleitschiene 14 ist fest mit dem hinteren Dachteil 3 verbunden, die Gleithülse 20 dagegen über die Gelenkverbindung 13 mit dem vorderen Dachteil 2.

Fig. 10 zeigt eine vergrößerte Darstellung der Gelenkverbindung 13, über die eine Absenkung des vorderen Dachteiles gegenüber dem hinteren Dachteil durchgeführt werden kann. Die an der Gleithülse 20 befestigte und über das Stellglied 16 über Antriebslenker 21 und 22 zu betätigende Gelenkverbindung 13 weist Lenker 24 bzw. 25 auf, die über eine Aufnahme 23 mit dem vorderen Dachteil gelenkig verbunden sind. Die Übertragung der Antriebsbewegung vom Stellglied 16 erfolgt über die Antriebslenker 21 und 22 sowie einen Verbindungslenker 26 auf den Lenker 24 des Gelenkmechanismus.

## Patentansprüche

1. Hardtop-Fahrzeugdach, bestehend aus einem vorderen Dachteil (2) und hinteren Dachteil (3) und einer Verstellkinematik (5) zur Verstellung der Dachteile (2 und 3) zwischen einer den Fahrzeuginnenraum überdeckenden Schließstellung und einer den Fahrzeuginnenraum freigebenden Ablagestellung, wobei die Verstellkinematik (5) eine fahrzeugfeste Führungskulisse (8) und ein in der Führungskulisse (8) geführtes, mit dem hinteren Dachteil (3) verbundenes Führungselement (11) umfaßt,
**dadurch gekennzeichnet,**
- **daß** eine zweite Führungskulisse (9) vorgesehen ist, die um eine fahrzeugfeste Drehachse (10) verschwenkbar gehalten ist, und
- **daß** das mit dem hinteren Dachteil (3) verbundene Führungselement (11) sowohl in der ersten als auch in der zweiten Führungskulisse (8 bzw. 9) gleitend geführt ist.

2. Hardtop-Fahrzeugdach nach Anspruch 1,
**dadurch gekennzeichnet,**
**daß** das hintere Dachteil (3) über die beiden Führungskulissen (8 und 9) geführt ist.

3. Hardtop-Fahrzeugdach nach Anspruch 1 oder 2,
**dadurch gekennzeichnet,**
**daß** das hintere Dachteil (3) um eine Schwenkachse verschwenkbar gehalten ist, die in der zweiten Führungskulisse (9) geführt ist.

4. Hardtop-Fahrzeugdach nach einem der Ansprüche 1 bis 3,
**dadurch gekennzeichnet,**
**daß** die beiden Führungskulissen (8 und 9) winklig zueinander angeordnet sind.

5. Hardtop-Fahrzeugdach nach einem der Ansprüche 1 bis 4,
**dadurch gekennzeichnet,**
**daß** die fahrzeugfeste erste Führungskulisse (8) einen teilkreisförmigen Abschnitt (8a) aufweist, dessen Mittelpunkt mit der Drehachse (10) der schwenkbaren zweiten Führungskulisse (9) zusammenfällt.

6. Hardtop-Fahrzeugdach nach Anspruch 5,
**dadurch gekennzeichnet,**
**daß** sich an den teilkreisförmigen Abschnitt (8a) der ersten Führungskulisse (8) ein geradliniger Abschnitt (8b) anschließt.

7. Hardtop-Fahrzeugdach nach einem der Ansprüche 1 bis 6,
**dadurch gekennzeichnet,**
**daß** die schwenkbare zweite Führungskulisse (9) von einem Stellglied (12) beaufschlagbar ist.

8. Hardtop-Fahrzeugdach nach einem der Ansprüche 1 bis 7,
**dadurch gekennzeichnet,**
**daß** das vordere Dachteil (2) über eine Gelenkverbindung (13) am hinteren Dachteil (3) gehalten ist.

9. Hardtop-Fahrzeugdach nach Anspruch 8,
**dadurch gekennzeichnet,**
**daß** das vordere Dachteil (2) in eine parallele Position zum hinteren Dachteil (3) überführbar ist.

10. Hardtop-Fahrzeugdach nach Anspruch 8 oder 9,
**dadurch gekennzeichnet,**
**daß** das vordere Dachteil (2) in Ablagestellung zwischen Fahrzeuginnenraum und hinterem Dachteil (3) abgelegt ist.

11. Hardtop-Fahrzeugdach nach einem der Ansprüche 8 bis 10,
**dadurch gekennzeichnet,**
**daß** die Gelenkverbindung (13) als Vier-Gelenk-Kinematik ausgebildet ist.

12. Hardtop-Fahrzeugdach nach einem der Ansprüche 8 bis 11,
**dadurch gekennzeichnet,**
**daß** die Gelenkverbindung (13) an einem Dachteil (2) befestigt ist und gleitend auf einer mit dem anderen Dachteil (3) verbundenen Gleitschiene (14) geführt ist.

13. Hardtop-Fahrzeugdach nach Anspruch 12,
**dadurch gekennzeichnet,**
**daß** die Gleitschiene (14) näherungsweise parallel zur Dachebene des hinteren Dachteils (3) verläuft.

14. Hardtop-Fahrzeugdach nach Anspruch 12 oder 13,
**dadurch gekennzeichnet,**
**daß** für die Beaufschlagung der Gelenkverbindung (13) und die Verschiebung auf der Gleitschiene (14) jeweils ein Antrieb (Stellglied 15 bzw. 16) vorgesehen ist.

## Claims

1. Hardtop vehicle roof, comprising a front roof part (2) and a rear roof (3), and adjusting kinematics (5) for adjusting the roof parts (2 and 3) between a closed position covering the vehicle interior and a storage position uncovering the vehicle interior, the adjusting kinematics (5) comprising a guide slot (8) fixed on the vehicle and a guide element (11) which is guided in the guide slot (8) and is connected to the rear roof part (3),
**characterized**
- **in that** a second guide slot (9) is provided, which slot is held in a manner such that it can pivot about an axis of rotation (10) fixed on the vehicle, and
- **in that** the guide element (11) which is connected to the rear roof part (3) is guided in a sliding manner both in the first and in the second guide slot (8 and 9).

2. Hardtop vehicle roof according to Claim 1,
**characterized**
**in that** the rear roof part (3) is guided via the two guide slots (8 and 9).

3. Hardtop vehicle roof according to Claim 1 or 2,
**characterized**
**in that** the rear roof part (3) is held in a manner such that it can pivot about a pivot axis which is guided in the second guide slot (9).

4. Hardtop vehicle roof according to one of Claims 1 to 3,
**characterized**
**in that** the two guide slots (8 and 9) are arranged at an angle with respect to each other.

5. Hardtop vehicle roof according to one of Claims 1 to 4,
**characterized**
**in that** the first guide slot (8), which is fixed on the vehicle, has a partially circular section (8a), the central point of which coincides with the axis of rotation (10) of the pivotable, second guide slot (9).

6. Hardtop vehicle roof according to Claim 5,
**characterized**
**in that** a rectilinear section (8b) adjoins the partially circular section (8a) of the first guide slot (8).

7. Hardtop vehicle roof according to one of Claims 1 to 6,
**characterized**
**in that** the pivotable, second guide slot (9) can be acted upon by an adjusting element (12).

8. Hardtop vehicle roof according to one of Claims 1 to 7,
**characterized**
**in that** the front roof part (2) is held on the rear roof part (3) via a hinge connection (13).

9. Hardtop vehicle roof according to Claim 8,
**characterized**
**in that** the front roof part (2) can be transferred into a parallel position to the rear roof part (3).

10. Hardtop vehicle roof according to Claim 8 or 9,
**characterized**
**in that** the front roof part (2) is deposited in a storage position between the vehicle interior and rear roof part (3).

11. Hardtop vehicle roof according to one of Claims 8 to 10,
**characterized**
**in that** the hinge connection (13) is designed as a four-bar kinematic arrangement.

12. Hardtop vehicle roof according to one of Claims 8 to 11,
**characterized**
**in that** the hinge connection (13) is fastened to a roof part (2) and is guided in a sliding manner on a sliding rail (14) connected to the other roof part (3).

13. Hardtop vehicle roof according to Claim 12,
**characterized**
**in that** the sliding rail (14) runs virtually parallel to the roof plain of the rear roof part (3).

14. Hardtop vehicle roof according to Claim 12 or 13,
**characterized**
**in that** a respective drive (adjusting element 15 or 16) is provided for acting upon the hinge connection (13) and for the displacement on the sliding rail (14).

## Revendications

1. Toit de véhicule de type rigide constitué d'une partie de toit avant (2) et d'une partie de toit arrière (3) ainsi que d'une cinématique de réglage (5) pour déplacer les parties de toit (2 et 3) entre une position de fermeture recouvrant l'espace intérieur du véhicule et une position de rangement dégageant l'espace intérieur du véhicule, dans lequel la cinématique de réglage (5) comprend une coulisse de guidage (8) fixée au véhicule et un élément de guidage (11) guidé dans la coulisse de guidage (8) et relié à la partie de toit arrière (3), **caractérisé en ce que** :
■ il est prévu une seconde coulisse de guidage (9) qui est montée à pivotement autour d'un axe de rotation (10) fixé au véhicule, et
■ l'élément de guidage (11) relié à la partie de toit arrière (3) est guidé par glissement autant dans la première que dans la seconde coulisse de guidage (8 ou selon le cas 9).

2. Toit de véhicule de type rigide selon la revendication 1, **caractérisé en ce que** la partie de toit arrière (3) est guidée via les deux coulisses de guidage (8 et 9).

3. Toit de véhicule de type rigide selon la revendication 1 ou 2, **caractérisé en ce que** la partie de toit arrière (3) est monté à pivotement autour d'un axe de pivotement, qui est guidé dans la seconde coulisse de guidage (9).

4. Toit de véhicule de type rigide selon l'une quelconque des revendications 1 à 3, **caractérisé en ce que** les deux coulisses de guidage (8 et 9) font un angle mutuel.

5. Toit de véhicule de type rigide selon l'une quelconque des revendications 1 à 4, **caractérisé en ce que** la première coulisse de guidage (8) fixée au véhicule présente une section partiellement circulaire (8a) dont le point central coïncide avec l'axe de rotation (10) de la seconde coulisse de guidage pivotante (9).

6. Toit de véhicule de type rigide selon la revendication 5, **caractérisé en ce qu'**à la section partiellement circulaire (8a) de la première coulisse de guidage (8) se raccorde une section droite (8b).

7. Toit de véhicule de type rigide selon l'une quelconque des revendications 1 à 6, **caractérisé en ce que** la seconde coulisse de guidage pivotante (9) peut être commandée par un élément de réglage (12).

8. Toit de véhicule de type rigide selon l'une quelconque des revendications 1 à 7, **caractérisé en ce que** la partie de toit avant (2) est reliée à la partie de toit arrière (3) via un assemblage articulé (13).

9. Toit de véhicule de type rigide selon la revendication 8, **caractérisé en ce que** la partie de toit avant (2) peut être transférée dans une position parallèle par rapport à la partie de toit arrière (3).

10. Toit de véhicule de type rigide selon la revendication 8 ou 9, **caractérisé en ce que** la partie de toit avant (2) est rangée en position de rangement entre l'espace intérieur du véhicule et la partie de toit arrière (3).

11. Toit de véhicule de type rigide selon l'une quelconque des revendications 8 à 10, **caractérisé en ce que** l'assemblage articulé (13) se présente sous la forme d'une cinématique à quatre articulations.

12. Toit de véhicule de type rigide selon l'une quelconque des revendications 8 à 11, **caractérisé en ce que** l'assemblage articulé (13) est fixé à une partie de toit (2) et est guidé par glissement sur un rail glissant (14) relié à l'autre partie de toit (3).

13. Toit de véhicule de type rigide selon la revendication 12, **caractérisé en ce que** le rail glissant (14) s'étend approximativement parallèlement au plan de la partie de toit arrière (3).

14. Toit de véhicule de type rigide selon la revendication 12 ou 13, **caractérisé en ce qu'**il est prévu à chaque fois une commande (élément de réglage 15 ou selon le cas 16) pour la commande de l'assemblage articulé (13) et le déplacement sur le rail de guidage (14).
